# EUROPEAN PATENT APPLICATION

(11) **EP 4 641 270 A1**
(43) Date of publication of application: **29.10.2025**
(21) Application number: 24171699.2
(22) Date of filing: 22.04.2024
(51) Int. Cl.: G02B 6/245, G02B 6/25

(54) **METHOD AND APPARATUS FOR CLEANING AN OPTICAL FIBER**

(71) Applicant: Nyfors Teknologi Aktiebolag, 135 70 Stockholm (SE)
(72) Inventor: Böttcher, Erik, 118 53 Stockholm (SE)
(74) Representative: Bjerkén Hynell KB

(57) **Abstract**

A method (100) for cleaning at least a portion of an uncovered part (2.1) of a core (2) of an optical fiber (1) comprising the core (2) and a protecting coating (3) tightly surrounding a covered part (2.2) of the core (2) is described. The method (100) comprises the steps of: cutting (101) a portion (5) of the protecting coating (3) at a transition between the covered part (2.2) and the uncovered part (2.1) of the core (2) and moving (103) the cut portion (5) of the protecting coating (3) along a longitudinal axis (a) of the optical fiber (1) and along the uncovered part (2.1) towards a free end (4) of the uncovered part (2.1) in order to clean at least said portion of the uncovered part (2.1) of the core (2). An apparatus (6) configured for handling an optical fiber (1) is also described.

## Description

### Technical field

The present invention relates to the technical field of optical fibers and particularly to methods an apparatus for cleaning an optical fiber.

### Background

Optical fibers are extensively used in different fields, such as telecommunication, due to their high capacity for data transmission and low signal loss. These fibers typically consist of a core surrounded by a protective coating.

The core of an optical fiber is typically made of glass, and it is the component that carries the light signals. The protecting coating, commonly made of a plastic material, is designed to protect the core from damage and contamination. It is crucial to maintain the integrity and cleanliness of the core to ensure the optimal performance of the fiber.

During the manufacturing, installation, or maintenance of optical fibers, it is often necessary to expose a portion of the core by removing a part of the protective coating. After this process, the exposed core may be the contaminated, which can degrade the performance of the fiber. Sometimes there is a time delay after the core has been exposed and a further operation on the core. Therefore, it is often necessary to clean the exposed part of the core, for example before joining several cores of optical fibers.

An exposed core of an optical fiber may be cleaned by being dipped in an alcohol or by using ultrasonic methods. WO02/44778 A1 is an example describing such a method where a cleaning station comprises an elongated or oblong ultrasonic bath containing alcohol or a similar fluid, into which an optical fiber may be dipped.

One disadvantage with the known methods for cleaning the exposed part of the core is that the methods are time-consuming and labor intensive.

### Summary

It is an object of the present invention to overcome, or at least alleviate, at least some of the above-mentioned problems and drawbacks. Further, it is an object of the present invention to provide an improved method and an improved apparatus enabling cleaning of an uncovered part of a core of an optical fiber in a simple and time efficient manner.

The above-mentioned object is achieved by the present invention according to the independent claims.

Preferred embodiments are set forth in the dependent claims.

According to a first aspect of the invention, the object is achieved a method according to claim 1.

Thus, the object is achieved by a method for cleaning at least a portion of an uncovered part of a core of an optical fiber comprising the core and a protecting coating tightly surrounding a covered part of the core. The method comprises the steps of:
- cutting a portion of the protecting coating at a transition between the covered part and the uncovered part of the core and
- moving the cut portion of the protecting coating along a longitudinal axis of the optical fiber and along the uncovered part towards a free end of the uncovered part in order to clean at least the portion of the uncovered part of the core.

With the core is meant herein the central part of an optical fiber arranged to guide the light. The core may consist of a center core and a cladding or may consist only of a cladding. One or several layers cladding may be applied. The core is the part of an optical fiber that is kept intact during performance of the claimed invention, i.e, the part that is not cut but that is intended to be cleaned by applying the invention. The core may be made of glass or may be made of a plastic material. Thus, the center core and cladding may be made of glass or of a plastic material or a combination thereof.

With the protecting coating is meant herein a single-, meaning one, layer protecting coating or multilayer-, meaning several layers, protecting coating. The protecting coating surrounds the core to protect the core. Preferably the protecting coating is made of a plastic material but other materials may also be used. When cutting and removing the protecting coating the core is kept intact.

Since at least the portion of an uncovered part of a core is to be cleaned by applying the claimed method, the optical fiber has been prepared by exposing the uncovered part of the core by removing the protecting coating from this part of the optical fiber. This may be done at the same place or previously prepared optical fiber may be provided to the place where the method is applied. As explained above, a core of an optical fiber need to be exposed by removing the protecting coating before joining the cores of optical fibers, Further, the exposed core need to be cleaned before the joining process is applied.

The portion of the coating is cut at the transition between the covered part and the uncovered part of the core which means that the portion is cut close to the end of the coating where the uncovered part of the core starts.

Moreover, since the protecting coating is tightly surrounding the covered part of the core and since the cut portion of the protecting coating is moved along the uncovered part towards the free end of the uncovered part, possible particles or dirt on the surface of the uncovered part of the core are removed by the cut portion. Thus, at least the portion of the uncovered part of the core is cleaned by the cut portion of the protecting coating.

Consequently, an improved method for cleaning at least the portion of an uncovered part of the core of an optical fiber is provided. The method is simple and time efficient and no additional liquids or additional equipment aimed for cleaning of the uncovered part of the core of an optical fiber are needed. However, according to some embodiments a cleaning liquid may be applied to the cut area where the cut portion has been cut, preferably between the remaining protecting coating and the cut portion. Thus, an improved method is provided also with respect to i.a. environmental aspects. Consequently, the above mentioned object is achieved.

Optionally, the steps of cutting the portion of the protecting coating and moving the cut portion along the uncovered part of the core are performed by means of a knife arrangement comprising a knife unit configured to cut at least the protecting coating. Further, the optical fiber and the knife unit are arranged to move in relation to each other along the longitudinal axis of the optical fiber in order to at least move the cut portion of the protecting coating towards the free end of the uncovered part of the core.

The knife unit may comprise a number of knifes, such as for example two or four knifes. The knife unit is configured to cut the protecting coating and preferably also to cut the core of the optical fiber. Thus, the portion of the protecting coating may be cut by the knife arrangement controlling the knife unit to penetrate the protecting coating and may be moved along the longitudinal axis of the optical fiber towards the free end of the uncovered part of the core by the knife unit retained at a predetermined depth in the protecting coating after penetrating the coating. The cut portion of the protecting coating may be then moved by means of the knife unit during the relative movement between the optical fiber and the knife unit. Consequently, a yet improved method is provided enabling using the knife arrangement and the knife unit to cut the portion of the protecting coating and to move the cut portion in order to clean the uncovered part of the core.

Optionally, the knife arrangement is configured to achieve a movement of the knife unit. along the longitudinal axis of the optical fiber to achieve the relative movement between the optical fiber and the knife unit in order to at least move the cut portion of the protecting coating towards the free end of the uncovered part of the core. Thus, the optical fiber may be held in a fixed position and the knife arrangement may be configured to achieve the movement of the knife unit along the longitudinal axis of the optical fiber.

Optionally, the portion of the protecting coating has a thickness greater than 2 mm, preferably greater than 5 mm measured along the longitudinal axis of the optical fiber. Thus, it has been tested that the thickness of the cut portion of the protecting coating is sufficient to clean the exposed uncovered part of the core.

Optionally, in the step of moving the cut portion of the protecting coating towards a free end of the uncovered part of the core, the cut portion is moved past the free end to clean the whole uncovered part and to be removed from the core. Thereby, the whole uncovered part of the core may be cleaned by the cut portion of the protecting coating.

Optionally, the method comprises the step of collecting the cut portion being removed from the core. Thus, the cut portion may be collected and later may be recycled. Consequently a yet improved method is provided with respect to i.a. environmental aspects.

Optionally, the method, further comprises the step of:
- removing a part of the protecting coating to achieve the uncovered part of the core before the step of cutting the portion of the protecting coating is performed. Thus, the uncovered part of the core may be achieved by the same apparatus and at the same place where the cleaning of the uncovered part is performed.

Optionally, the coating is made of a plastic material. The plastic material may be a polymer.

Optionally, the core is made of glass. As an alternative the core may be made of a plastic material.

According to a second aspect of the invention, the object is achieved by an apparatus according to the independent apparatus claim.

The apparatus is arranged to perform the method according to the present invention. Thus, the apparatus has the same technical features and advantages as the corresponding features of the method as above. Consequently, all these technical features and advantages are not repeated or explained anew in order to avoid unnecessary repetition.

Accordingly, the object is achieved by an apparatus configured for handling an optical fiber. The apparatus comprises:
- a holding means for holding a covered part of a core of an optical fiber comprising the core and a protecting coating tightly surrounding the covered part of the core, and
- a cutting arrangement configured to cut at least the protecting coating of the optical fiber. The cutting arrangement is configured to cut a portion of the protecting coating at a transition between the covered part and the uncovered part of the core, wherein
   the holding means and the cutting arrangement are arranged to move in relation to each other along a longitudinal axis of the optical fiber at least to move the cut portion of the protecting coating along the longitudinal axis of the optical fiber and along the uncovered part towards a free end of the uncovered part in order to clean at least a portion of the uncovered part of the core.

With the core is meant herein the central part of an optical fiber arranged to guide the light. The core may consist of a center core and a cladding or may consist only of a cladding. One or several layers cladding may be applied. The core is the part of an optical fiber that is kept intact during performance of the claimed invention, i.e, the part that is not cut but that is intended to be cleaned by applying the invention. The core may be made of glass or may be made of a plastic material. Thus, the center core and cladding may be made of glass or of a plastic material or a combination thereof.

With the protecting coating is meant herein a single-, meaning one, layer protecting coating or multilayer-, meaning several layers, protecting coating. The protecting coating surrounds the core to protect the core. Preferably the protecting coating is made of a plastic material but other materials may also be used. When cutting and removing the protecting coating the core is kept intact.

Since at least the portion of an uncovered part of a core is to be cleaned, the optical fiber may be prepared by exposing the uncovered part of the core by removing the protecting coating from this part of the optical fiber. This may be done at the same place or previously prepared optical fiber may be provided to the place where the apparatus operates. Further, the optical fiber is positioned in the apparatus and the covered part of the optical fiber is positioned in the holding means to be held by the holding means. The holding means may comprise a number of clamps configured for holding the covered part.

As explained above, a core of an optical fiber need to be exposed by removing the protecting coating before joining the cores of optical fibers, Further, the exposed core need to be cleaned before the joining process is applied.

According to some embodiments, the cutting arrangement may be a stripping arrangement arranged to grab and hold and cut a portion of the protecting coating.

The portion of the coating is cut at the transition between the covered part and the uncovered part of the core which means that the portion is cut close to the end of the coating where the uncovered part of the core starts.

Moreover, since the protecting coating is tightly surrounding the covered part of the core and since the cut portion of the protecting coating is moved along the uncovered part towards the free end of the uncovered part, possible particles or dirt on the surface of the uncovered part of the core are removed by the cut portion. Thus, at least the portion of the uncovered part of the core is cleaned by the cut portion of the protecting coating.

The holding means and the cutting arrangement are arranged to move in relation to each other along the longitudinal axis of the optical fiber in order to at least move the cut portion of the protecting coating towards the free end of the uncovered part of the core in order to clean at least the portion of the uncovered part of the core. Thus, the holding means may be arranged movable to move the optical fiber, held by the holding means, in a direction along the longitudinal axis and in relation to the cutting arrangement being arranged fixed with respect to the direction along the longitudinal axis of the optical fiber. As an alternative, the cutting arrangement may be arranged movable to move in a direction along the longitudinal axis and in relation to the optical fiber being held by the holding means being arranged fixed with respect to the direction along the longitudinal axis of the optical fiber. As a further alterative, both the holding means and the cutting arrangement may be arranged movable in a direction along the longitudinal axis of the optical fiber.

Consequently, an improved apparatus for handling of an optical fiber is provided having conditions enabling cleaning at least the portion of an uncovered part of the core of an optical fiber in an efficient way. The method of cleaning the uncovered portion of the core is simple and time efficient. Further, no additional liquids or additional equipment aimed for cleaning of the uncovered part of the core are needed. However, according to some embodiments a cleaning liquid may be applied to the cut area where the cut portion has been cut, preferably between the remaining protecting coating and the cut portion. Thus, an improved apparatus is provided also with respect to i.a. environmental aspects. Consequently, the above mentioned object is achieved.

Optionally, the cutting arrangement is a knife arrangement comprising a knife unit. configured to cut at least the protecting coating of the optical fiber. The knife arrangement is configured to cut, by means of the knife unit, the portion of the protecting coating at the transition between the covered part and the uncovered part of the core. Further, the holding means and the knife unit are arranged to move in relation to each other along the longitudinal axis a of the optical fiber at least to move the cut portion of the protecting coating along the longitudinal axis of the optical fiber and along the uncovered part . towards a free end of the uncovered part in order to clean at least the portion of the uncovered part of the core.

The knife unit is configured to cut the protecting coating and preferably also to cut the core of the optical fiber. Thus, the portion of the protecting coating may be cut by the knife arrangement controlling the knife unit to penetrate the protecting coating and may be moved along the longitudinal axis of the optical fiber towards the free end of the uncovered part of the core by the knife unit retained at a predetermined depth in the protecting coating after penetrating the coating. Thereby, the cut portion of the protecting coating may be then moved by means of the knife unit during the relative movement between the optical fiber and the knife unit. Consequently, a yet improved apparatus is provided enabling using the knife arrangement and the knife unit to cut the portion of the protecting coating and to move the cut portion in order to clean the uncovered part of the core.

The knife unit may comprise a number of knifes, such as for example two or four knifes.

Optionally, the knife arrangement is configured to achieve a movement of the knife unit. along the longitudinal axis of the optical fiber to achieve the relative movement between the optical fiber and the knife unit in order to at least move the cut portion of the protecting coating towards the free end of the uncovered part of the core.

Optionally, the cut portion of the protecting coating is moved past the free end of the uncovered part to clean the whole uncovered part and to be removed from the core during the relative movement between the holding means and the cutting arrangement.

Optionally, the apparatus, comprises a collection container configured to collect at least the cut portion of the protecting coating.

Optionally, the cutting arrangement is arranged to cat the portion of the protecting coating having a thickness greater than 2 mm, preferably greater than 5 mm measured along the longitudinal axis of the optical fiber.

### Brief description of the drawings

Various aspects of the invention, including its particular features and advantages, will be readily understood from the example embodiments discussed in the following detailed description and the accompanying drawings, in which:
Fig. 1 is a schematical view of an optical fiber positioned in an apparatus for handling optical fibers, wherein the optical fiber is illustrated before a part of the protecting coating of the optical fiber has been removed,
Fig. 2 is a schematical view of the optical fiber and the apparatus illustrated in Fig. 1 after the part of the protecting coating has been removed to expose an uncovered part of the core of the optical fiber, further a portion the protecting coating has been cut by means of a knife unit,
Fig. 3 is a schematical view of the optical fiber and the apparatus illustrated in Fig. 2, wherein the cut portion of the protecting coating has been moved along a longitudinal axis of the optical fiber and along the uncovered part towards a free end of the uncovered part in order to clean at least a portion of the uncovered part,
Fig. 4 is a schematical view of the optical fiber and the apparatus illustrated in Fig. 3, wherein the cut portion has been moved past the free end to clean the whole uncovered part, further the cut portion has been collected in a collection container and the knife unit has been positioned for a further operation such as for example cutting of the core of the optical fiber,
Fig. 5 is a flow diagram illustrating a method according to the invention.

### Detailed description

Aspects of the present invention will now be described more fully. Like numbers refer to like elements throughout. Well-known functions or constructions will not necessarily be described in detail for brevity and/or clarity. Throughout the figures the same, or similar, items have the same reference signs.

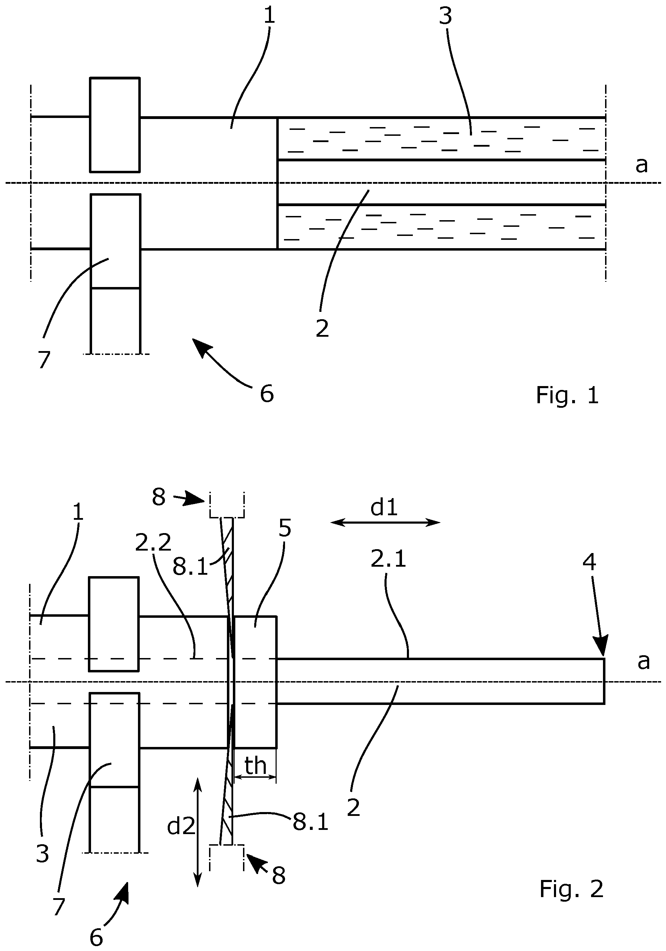

With reference to Fig. 1, a schematical view of an optical fiber! positioned in an apparatus 6 for handling optical fibers. I Fig. 1, the optical fiber 1 is illustrated before a part of the protecting coating 3 has been removed. The very schematically illustrated apparatus 6 is used for a stripping operation of the optical fiber, during which a part of the protective coating is removed to expose the core before joining the core to another core by, for example a welding procedure.

As illustrated in Fig. 1, the optical fiber 1 comprises a core 2 and a protecting coating 3 tightly surrounding the core 2. In Fig. 1, a cross section of a part of the optical fiber 1 is illustrated to show the core 2 and the protecting coating 3. The apparatus 6 comprises a holding means 7 for holding the optical fiber 1, and particularly for holding a covered part of the core 2 of the optical fiber 1.The holding means 7 is arranged to apply pressure force to the optical fiber 1 to hold the optical fiber. The holding means 7 may comprise a number of movable clamps configured for holding the covered part of the core 2. Preferably, the core 2 is made of glass. As an alternative the core 2 may be made of a plastic material. The protecting coating 3 may be made of a plastic material, such as a polymer.

According to the illustrated embodiment, the protecting coating 3 is a single, meaning one, layer protecting coating 3. According to some embodiments, the protecting coating 3, may be a multilayer, meaning several layers, protecting coating.

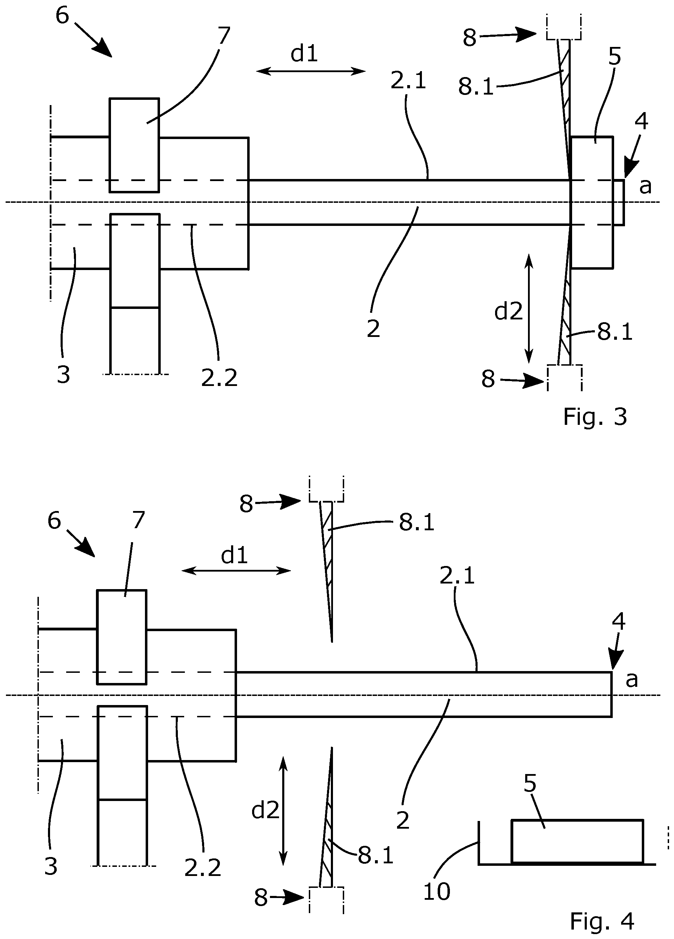

With reference to **Fig. 2** and **Fig. 3** a stripped optical fiber 1 positioned in the apparatus 6 is illustrated. As illustrated in Fig. 2 and Fig. 3, the apparatus 6 comprises:
- a holding means 7 for holding a covered part 2.2 of a core 2 of the optical fiber 1 and
- a cutting arrangement 8 configured to cut at least the protecting coating 3 of the optical fiber 1. The cutting arrangement 8 is configured to cut a portion 5 of the protecting coating 3 at a transition between the covered part 2.2 and the uncovered part 2.1 of the core 2. Further, the holding means 7 and the cutting arrangement 8 are arranged to move in relation to each other along a longitudinal axis a of the optical fiber 1 at least to move the cut portion 5 of the protecting coating 3 along the longitudinal axis a of the optical fiber 1 and along the uncovered part 2.1 towards a free end 4 of the uncovered part 2.1 in order to clean at least a portion of the uncovered part 2.1 of the core 2. As illustrated in Fig. 2 and Fig. 3 the holding means 7 and the cutting arrangement 8 are arranged to move in relation to each other along the longitudinal axis a in a first direction d1.

The relative movement between the the holding means 7 and the cutting arrangement 8 in the first direction d1 along the longitudinal axis a may be achieved according to the following:
a) the holding means 7 may comprise an actuator (not shown) and may be arranged movable to move the optical fiber 1, held by the holding means 7, in the first direction d1in relation to the cutting arrangement 8 being arranged fixed with respect to the first direction d1,
b) the cutting arrangement 8 may comprise a further actuator (not shown) and may be arranged movable to move in the first direction d1 in relation to the optical fiber 1 being held by the holding means 7 being arranged fixed with respect to the first direction d1,
c) both the holding means 7 and the cutting arrangement 8 may be arranged movable in the first direction d1 along the longitudinal axis a of the optical fiber 1.

According to the illustrated embodiments, the cutting arrangement 8 is a knife arrangement 8 comprising a knife unit 8.1 configured to cut at least the protecting coating 3 of the optical fiber 1.

As illustrated in Fig. 2, the portion 5 of the protecting coating 3 has been cut by means of the knife unit 8.1 at the transition between the covered part 2.2 and the uncovered part 2.1 of the core 2. The knife arrangement 8 is configured to move the knife unit 8.1 in a second direction d2 being a transverse direction to the first direction d1 and to the longitudinal axis a of the optical fiber. The second direction d2 may be perpendicular to the first direction d1. The second direction comprises a direction towards the core 2 and a direction from the core 2 of the optical fiber. In order to cut the portion 5 of the protecting coating 3, the knife unit 8.1 moves towards the core 2. When the cut procedure is finished, the knife unit 8.1 may move from the core 2 of the optical fiber 1.

As illustrated in Fig. 2 and Fig. 3, the portion 5 of the protecting coating 3 has a thickness th. The thickness th is greater than 2 mm, preferably greater than 5 mm measured along the longitudinal axis a of the optical fiber 1. It has been tested that the thickness th of the portion 5 need to be enough to remove possible particles or dirt from the uncovered part 2.1 of the core 2. In order to avoid any unnecessary material waste, the thickness th of the portion 5 should not be to large.

According to the embodiments illustrated in Fig. 3, the cut portion 5 has been moved along the longitudinal axis a of the optical fiber 1 and along the uncovered part 2.1 towards the free end 4 of the uncovered part 2.1 in order to clean a portion of the uncovered part 2.1 of the core 2.

The knife unit 8.1 may comprise a number of knifes, such as for example two or four knifes, such as sharp blades 8.1. The knife unit 8.1 is configured to cut the protecting coating 3 and preferably also to cut the core 2 of the optical fiber 1. Thus, the portion 5 of the protecting coating 3 may be cut by the knife arrangement 8 controlling the knife unit 8.1 to penetrate the protecting coating 3 by moving the knife 8.1 in the second direction d2 towards the core 2. Further, since the holding means 7 and the knife unit 8.1 are arranged to move in relation to each other in the first direction d1, the cut portion 5 may be moved towards the free end 4 of the core 2 by the knife unit 8.1 retained at a predetermined depth in the protecting coating 3 after penetrating the coating 3 to cut the portion 5. Preferably, the knife unit 8.1 does not penetrate the coating 3 completely and does not touch the core 2.

With reference to **Fig 4**, a schematical view of the optical fiber 1 and the apparatus 6 illustrated in Fig. 2 and Fig. 3 is illustrated, wherein the cut portion 5 has been moved past the free end 4 to clean the whole uncovered part 2.1 of the core 2. According to the illustrated embodiments, the apparatus 6 may comprise a collection container 10 configured to collect at least the cut portion 5 of the protecting coating 3. The collection container 10 is illustrated in a schematical manner. The collection container 10 may be a container 10 positioned below the free end 4 of the core 2 and the cut portion 5 may be collected by falling down by gravity after passing the free end 4. The collection container 10 may also be arranged to collect liquids used during operation of the apparatus 6 and to collect other rest products such as cut portions of the core 2.

According to the illustrated embodiments the knife unit 8.1 has been positioned in an operation position for a further operation such as, for example, for cutting of the core 2 of the optical fiber 1.

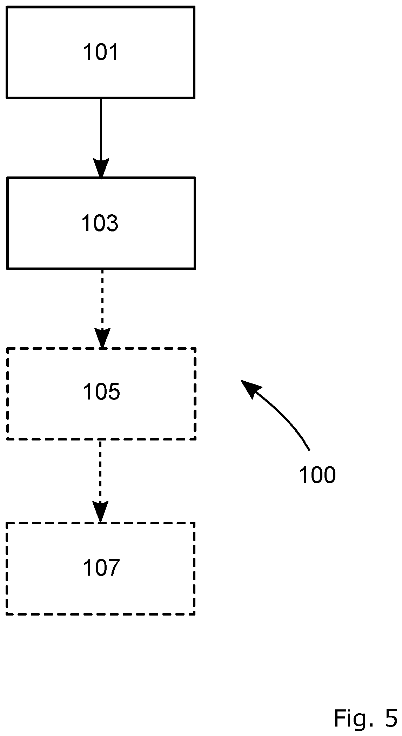

With reference to **Fig. 5**, a method 100 for cleaning at least a portion of an uncovered part 2.1 of a core 2 of an optical fiber 1 comprising said core 2 and a protecting coating 3 tightly surrounding a covered part 2.2 of the core 2 is illustrated as a flow diagram. The optical fiber 1 is illustrated in Fig. 1 - Fig. 4.

The method 100 comprises the steps of:
- cutting 101 a portion 5 of the protecting coating 3 at a transition between the covered part 2.2 and the uncovered part 2.1 of the core 2 and
- moving 103 the cut portion 5 of the protecting coating 3 along a longitudinal axis a of the optical fiber 1 and along the uncovered part 2.1 towards a free end 4 of the uncovered part 2.1 in order to clean at least said portion of the uncovered part 2.1 of the core 2.

Preferably, the steps of cutting 101 the portion 5 of the protecting coating 3 and moving 103 the cut portion 5 along the uncovered part 2.1 of the core 2 are performed by means of a knife arrangement 8 comprising a knife unit 8.1 configured to cut at least the protecting coating 3, wherein the optical fiber 1 and the knife unit 8.1 are arranged to move in relation to each other along the longitudinal axis a of the optical fiber 1 in order to at least move 103 the cut portion 5 of the protecting coating 3 towards the free end 4 of the uncovered part 2.1 of the core 2.

Preferably, the knife arrangement 8 is configured to achieve a movement of the knife unit 8.1 along the longitudinal axis a of the optical fiber 1 to achieve the relative movement between the optical fiber 1 and the knife unit 8.1 in order to at least move 103 the cut portion 5 of the protecting coating 3 towards the free end 4 of the uncovered part 2.1 of the core 2.

According to some embodiments, in the step of moving 103 the cut portion 5 of the protecting coating 3 towards a free end 4 of the uncovered part 2.1 of the core 2, the cut portion 5 is moved past the free end 4 to clean the whole uncovered part 2.1 and to be removed from the core 2.

According to some embodiments, the method 100 comprises the step of collecting 105 the cut portion 5 being removed from the core 2.

According to some embodiments, the method 100 further comprising the step of:
- removing 107 a part of the protecting coating 3 to achieve said uncovered part 2.1 of the core 2 before the step of cutting 101 the portion 5 of the protecting coating 3 is performed.

## Claims

1. A method (100) for cleaning at least a portion of an uncovered part (2.1) of a core (2) of an optical fiber (1) comprising said core (2) and a protecting coating (3) tightly surrounding a covered part (2.2) of the core (2), the method (100) comprises the steps of:
- cutting (101) a portion (5) of the protecting coating (3) at a transition between the covered part (2.2) and the uncovered part (2.1) of the core (2) and
- moving (103) the cut portion (5) of the protecting coating (3) along a longitudinal axis (a) of the optical fiber (1) and along the uncovered part (2.1) towards a free end (4) of the uncovered part (2.1) in order to clean at least said portion of the uncovered part (2.1) of the core (2).

2. The method (100) according to claim 1, wherein the steps of cutting (101) the portion (5) of the protecting coating (3) and moving (103) the cut portion (5) along the uncovered part (2.1) of the core (2) are performed by means of a knife arrangement (8) comprising a knife unit (8.1) configured to cut at least the protecting coating (3), wherein the optical fiber (1) and the knife unit (8.1) are arranged to move in relation to each other along the longitudinal axis (a) of the optical fiber (1) in order to at least move (103) the cut portion (5) of the protecting coating (3) towards the free end (4) of the uncovered part (2.1) of the core (2).

3. The method according to claim 2, wherein the knife arrangement (8) is configured to achieve a movement of the knife unit (8.1) along the longitudinal axis (a) of the optical fiber (1) to achieve the relative movement between the optical fiber (1) and the knife unit (8.1) in order to at least move (103) the cut portion (5) of the protecting coating (3) towards the free end (4) of the uncovered part (2.1) of the core (2).

4. The method (100) according to any one of the preceding claims, wherein the portion (5) of the protecting coating (3) has a thickness (th) greater than 2 mm, preferably greater than 5 mm measured along the longitudinal axis (a) of the optical fiber (1).

5. The method (100) according to one of the preceding claims, wherein in the step of moving (103) the cut portion (5) of the protecting coating (3) towards a free end (4) of the uncovered part (2.1) of the core (2), the cut portion (5) is moved past the free end (4) to clean the whole uncovered part (2.1) and to be removed from the core (2).

6. The method (100) according to claim 5, comprising the step of collecting (105) the cut portion (5) being removed from the core (2).

7. The method (100) according to any one of the preceding claims, further comprising the step of:
- removing (107) a part of the protecting coating (3) to achieve said uncovered part (2.1) of the core (2) before the step of cutting (101) the portion (5) of the protecting coating (3) is performed.

8. The method (100) according to any one of the preceding claims, wherein the coating (3) is made of a plastic material.

9. The method (100) according to any one of the preceding claims, wherein the core (2) is made of glass.

10. An apparatus (6) configured for handling an optical fiber (1), the apparatus (6) comprises:
- a holding means (7) for holding a covered part (2.2) of a core (2) of an optical fiber (1) comprising said core (2) and a protecting coating (3) tightly surrounding the covered part (2.2) of the core (2), and
- a cutting arrangement (8) configured to cut at least the protecting coating (3) of the optical fiber (1), wherein the cutting arrangement (8) is configured to cut a portion (5) of the protecting coating (3) at a transition between the covered part (2.2) and the uncovered part (2.1) of the core (2), wherein
the holding means (7) and the cutting arrangement (8) are arranged to move in relation to each other along a longitudinal axis (a) of the optical fiber (1) at least to move the cut portion (5) of the protecting coating (3) along the longitudinal axis (a) of the optical fiber (1) and along the uncovered part (2.1) towards a free end (4) of the uncovered part (2.1) in order to clean at least a portion of the uncovered part (2.1) of the core (2).

11. The apparatus (6) according to claim 10, wherein the cutting arrangement (8) is a knife arrangement (8) comprising a knife unit (8.1) configured to cut at least the protecting coating (3) of the optical fiber (1), wherein the knife arrangement (8) is configured to cut, by means of the knife unit (8.1), the portion (5) of the protecting coating (3) at the transition between the covered part (2.2) and the uncovered part (2.1) of the core (2), wherein the holding means (7) and the knife unit (8.1) are arranged to move in relation to each other along the longitudinal axis (a) of the optical fiber (1) at least to move the cut portion (5) of the protecting coating (3) along the longitudinal axis (a) of the optical fiber (1) and along the uncovered part (2.1) towards a free end (4) of the uncovered part (2.1) in order to clean at least said portion of the uncovered part (2.1) of the core (2).

12. The apparatus (6) according to claim 11, wherein the knife arrangement (8) is configured to achieve a movement of the knife unit (8.1) along the longitudinal axis (a) of the optical fiber (1) to achieve the relative movement between the optical fiber (1) and the knife unit (8.1) in order to at least move (103) the cut portion (5) of the protecting coating (3) towards the free end (4) of the uncovered part (2.1) of the core (2).

13. The apparatus (6) according to any one of claims 10 to 12, wherein the cut portion (5) of the protecting coating (3) is moved past the free end (4) of the uncovered part (2.1) to clean the whole uncovered part (2.1) and to be removed from the core (2) during the relative movement between the holding means (7) and the cutting arrangement (8).

14. The apparatus (6) according to any one of claims 10 to 13, comprising a collection container (10) configured to collect at least the cut portion (5) of the protecting coating (3).

15. The apparatus (6) according to any one of claims 10 to 14, wherein the cutting arrangement (8) is arranged to cat the portion (5) of the protecting coating (3) having a thickness (th) greater than 2 mm, preferably greater than 5 mm measured along the longitudinal axis (a) of the optical fiber (1).
